# FASCICULE DE BREVET EUROPEEN

(11) **EP 0 718 516 B1**
(45) Date de publication et mention de la délivrance du brevet: **05.07.2000**
(21) Numéro de dépôt: 95402878.3
(22) Date de dépôt: 20.12.1995
(51) Int. Cl.: F16D 3/62, F16D 3/79

(54) **Accouplement flexible pour arbres tournants**
Elastische Kupplung für drehende Wellen
Flexible coupling for rotating shafts

(30) Priorité: 21.12.1994 FR 9415379
(43) Date de publication de la demande: 26.06.1996
(73) Titulaire: Hispano-Suiza, 75015 Paris (FR)
(72) Inventeur: Deperrois, André R.C., F-75014 Paris (FR)
(74) Mandataire: Berrou, Paul

(56) Documents cités:
- EP-A- 0 059 267
- EP-A- 0 192 096
- DE-A- 1 800 613
- DE-A- 2 048 152
- DE-A- 2 410 165
- DE-B- 2 738 101
- DE-U- 8 606 870
- FR-A- 2 409 417
- US-A- 2 101 078

## Description

L'invention se rapporte aux dispositifs d'accouplement flexible de deux arbres tournants, et plus particulièrement mais non exclusivement aux dispositifs de ce type utilisés en aéronautique, de tels dispositifs comportant habituellement un organe flexible métallique lié de façon rigide à chacun des arbres.

Les accouplements dits flexibles sont des moyens bien connus pour lier en rotation deux arbres susceptibles de présenter un désalignement de leurs axes respectifs ou un écart dans le positionnement de ces arbres le long de leurs axes. Les accouplements flexibles utilisés en aéronautique doivent présenter des performances élevées sous un encombrement réduit, avec cependant un désalignement des arbres faible et un faible décalage axial de ces arbres. De tels accouplements dont le diamètre peut être inférieur à 100 mm transmettent couramment un couple de 1000 Nm à des vitesses de 20 000 tours/mm, à des températures atteignant 100°C, et doivent présenter une fiabilité totale pendant une durée d'utilisation prédéterminée. Une bonne tenue au comportement vibratoire est aussi exigée. Ceci implique :
- une grande raideur en rotation, afin de ne pas favoriser l'apparition d'oscillations dans le mouvement de rotation,
- une réduction des oscillations des lames élastiques suivant des directions perpendiculaires au plan de chaque lame.

De tels accouplements comportent habituellement un organe flexible métallique, des moyens de liaison de l'organe flexible à ces arbres, ainsi que des moyens pour réduire les vibrations dans l'accouplement.

Lorsque l'accouplement est susceptible d'être utilisé dans les deux sens de rotation, l'organe flexible comporte des éléments déformables qui sont sollicités en traction dans un sens de rotation et en compression dans l'autre, ainsi que d'autres éléments déformables sollicités d'une manière opposée.

On connait par le brevet FR 2 409 417 un dispositif d'accouplement dont l'organe flexible comporte un empilement de lames d'acier à ressort maintenues écartées entre elles et solidement boulonnées sur deux plateaux en bout de chacun des arbres. Dans une première forme de réalisation, ces lames ont la forme générale d'un polygone convexe régulier, l'écartement de ces lames étant assuré par des rondelles. Dans une seconde forme de réalisation, les lames se présentent sous la forme de segments disposés selon les côtés d'un polygone régulier et boulonnées à leurs extrémités sur les deux plateaux, les lames d'un côté permettant de maintenir écartées par imbrication les lames des deux côtés adjacents. Dans les deux cas, une matière amortissante est disposée entre les lames aux endroits ou celles-ci sont susceptibles de vibrer, afin de réduire ces vibrations génératrices de fatigue de la matière, ainsi que les frottements mutuels qui en résultent, ces frottements étant générateurs d'usure des lames.

L'un des problèmes liés à de tels dispositifs est la concentration des contraintes au bord des zones de liaison de l'organe flexible, cette concentration réduisant la résistance à la rupture et en fatigue de l'accouplement. Cet effet est rendu plus important du fait que les faces des éléments déformables dont un angle vif avec le bord des moyens permettant de les maintenir écartées, ces moyens étant par exemple des rondelles ou d'autres lames élastiques.

Un autre problème apparait sur les éléments déformables lorsqu'ils sont sollicités en compression avec apparition d'une déformation d'instabilité appelée flambage. Il est bien connu que le flambage provoque des contraintes très importantes sur les accouplements et l'expérience montre que les ruptures se produisent préférentiellement sur les éléments déformables en compression. Ces éléments déformables doivent être minces pour limiter les contraintes apparaissant sous l'effet du désalignement des arbres, mais cette minceur les rend plus vulnérables au flambage.

L'apparition d'une déformation de flambage est aussi favorisé par :
- la flexion des éléments déformables résultant du désalignement des arbres,
- les vibrations et résonnances auxquelles sont soumis les éléments flexibles, la flexion de ces éléments résultant du désalignement des arbres étant alternée.

Un autre problème provient du montage dit en porte-à-faux de l'organe flexible boulonné sur les plateaux parallèlement à l'axe des arbres. Ce porte-à-faux provoque un effet de levier sensible aux forces du couple de transmission qui sont perpendiculaires à l'axe des arbres, cet effet de levier provoquant lui-même la torsion des moyens de liaison et une déformation supplémentaire de l'organe flexible génératrice de contrainte supplémentaire et de risques accrus de flambage.

On connait par le brevet DE 2 048 152 un accouplement flexible comportant un organe flexible monobloc en forme de disque avec une pluralité de lumières radiales formant les lames élastiques. L'organe flexible est en caoutchouc, matière signalétique ou autre matière non métallique surmoulé sur des douilles au travers desquelles passent des goujons permettant la liaison aux arbres. L'organe flexible tel qu'il est décrit et illustré par les figures exige un matériau très souple comme le caoutchouc et ne peut être transposé au problème à résoudre, car il ne résisterait pas :
- aux températures d'utilisation,
- aux couples élevés à transmettre, et il n'offrirait pas une raideur suffisante en rotation.

On connait aussi par le brevet EP 0 059 267 un accouplement flexible dont l'organe flexible est composé de lames en matière synthétique renforcée par des fibres et moulées ensemble afin de constituer un organe flexible monobloc. Cet organe flexible ne peut être transposé au problème à résoudre pour les mêmes raisons que le brevet cité ci-dessus. De plus, la disposition plane des fibres de renfort ne leur permettent pas de s'opposer aux concentrations de contraintes à la surface de ces lames au bord des zones de liaison. La matière synthétique tend en conséquence à se fissurer à cet endroit, ce qui fragilise l'accouplement et réduit sa durée de vie.

Pour résoudre le problème des concentrations de contraintes au bord des zones de liaison de l'organe flexible, l'invention propose un accouplement flexible de deux arbres tournants dont l'organe flexible comporte des zones de liaison et des zones de déformation présentant les caractéristiques suivantes :
- l'organe flexible est en alliage métallique à haute limite d'élasticité,
- les zones de liaison sont au nombre de quatre, afin d'augmenter la longueur des zones de déformation et de réduire en conséquence la rigidité de l'organe flexible ainsi que l'apparition des contraintes liées à la déformation dudit organe flexible, lesdites zones de liaison étant disposées sur les sommets d'un rectangle, deux zones de liaison opposées étant reliées chacune au même arbre.
- deux zones de liaison reliées par une zone de déformation constituent un ensemble monobloc;
- les zones de déformation comportent chacune une succession d'au moins deux lames planes séparées et formées par des fentes, lesdites fentes traversant de part et d'autre les zones déformables, lesdites lames et lesdites fentes étant situées chacune dans un plan perpendiculaire à l'axe des arbres. Les lames ainsi aménagées dans les zones déformables relient donc les zones de liaison.

Un tel accouplement est remarquable en ce que les lames sont solidaires entre elles et solidaires des zones de liaison par continuité de la matière les constituant, et en ce que les extrémités des fentes sont arrondies.

Pour améliorer la résistance des lames au flambage, on relie les parois latérales de chaque fente et donc les lames qu'elles forment, par au moins un renfort assurant cette liaison de préférence par continuité de la matière. Dans une première forme de réalisation de l'invention l'organe flexible comporte une succession fermée de zones de liaison reliées alternativement à chacun des arbres, et reliées deux à deux entre elles par des zones de déformation. De préférence, les zones de liaison seront disposées suivant les sommets d'un carré, les zones de déformation en constituant les côtés.

Dans une seconde forme de réalisation de l'invention, l'organe flexible se compose de biellettes comportant chacune successivement une zone de liaison à l'un des arbres, une zone déformable et une zone de liaison à l'autre arbre.

Pour résoudre le problème de la flexion des moyens de liaison de l'organe flexible aux deux arbres, les moyens de liaison maintenant l'organe flexible par serrage, par exemple par boulonnage, exercent ces serrages suivant des directions radiales. Dans une forme de réalisation préférée, les moyens de liaison comportent un tambour solidaire d'une arbre à son extrémité, des bossages sur l'extrémité de l'autre arbre, ces bossages étant positionnés à l'intérieur du tambour, des moyens de serrage tels des boulons serrant l'organe flexible contre la paroi intérieure du tambour suivant une direction radiale centrifuge, ainsi que des moyens de serrage tels des vis serrant l'organe flexible sur les bossages suivant une direction radiale centripète. Le tambour comporte aussi des ouvertures en regard de ces derniers moyens de serrage, lesdites ouvertures pouvant être agrandies et réduisant alors le tambour à une fourche dont la base des branches serait élargie.

Un avantage de l'invention est de permettre un montage de l'organe flexible très simple et sans balourd pouvant être effectué sans outillage particulier sur un quelconque site de maintenance.

La réalisation de l'organe flexible, dont le taillage des fentes est réalisé par la micromécanique, par électroérosion ou par usinage chimique par fil, est économique.

L'invention permet aussi d'utiliser des barres de titane qui sont faciles à approvisionner, au contraire des tôles de ce même alliage.On sait que les alliages de titane peuvent avoir une résistance comparable à certains aciers avec un module d'élasticité ou module d'Young deux fois plus faible. Ceci permet d'assouplir les lames à résistance égale, et de réduire ainsi les contraintes de déformation. Ceci permet aussi d'augmenter l'épaisseur des lames et d'augmenter ainsi la résistance de ces lames au flambage. L'organe flexible sera ainsi réalisé de préférence en un alliage du groupe titane-aluminium-vanadium (TA6V).

L'invention sera mieux comprise et les avantages qu'elle procure apparaitront plus clairement au vue de trois exemples de réalisation donnés à titre non limitatif et non exclusif, ainsi que des figures annexées dans lesquelles :
- la figure 1 est une vue latérale d'un accouplement flexible comportant un organe flexible monobloc et carré
- la figure 2 est une vue axiale avec une coupe partielle de ce même accouplement
- la figure 3 illustre un accouplement dont l'organe flexible se compose de biellettes.
- la figure 4 illustre un accouplement que les moyens de liaison maintiennent par des serrages suivant des directions radiales
- la figure 5 est une vue axiale en coupe de ce même accouplement.

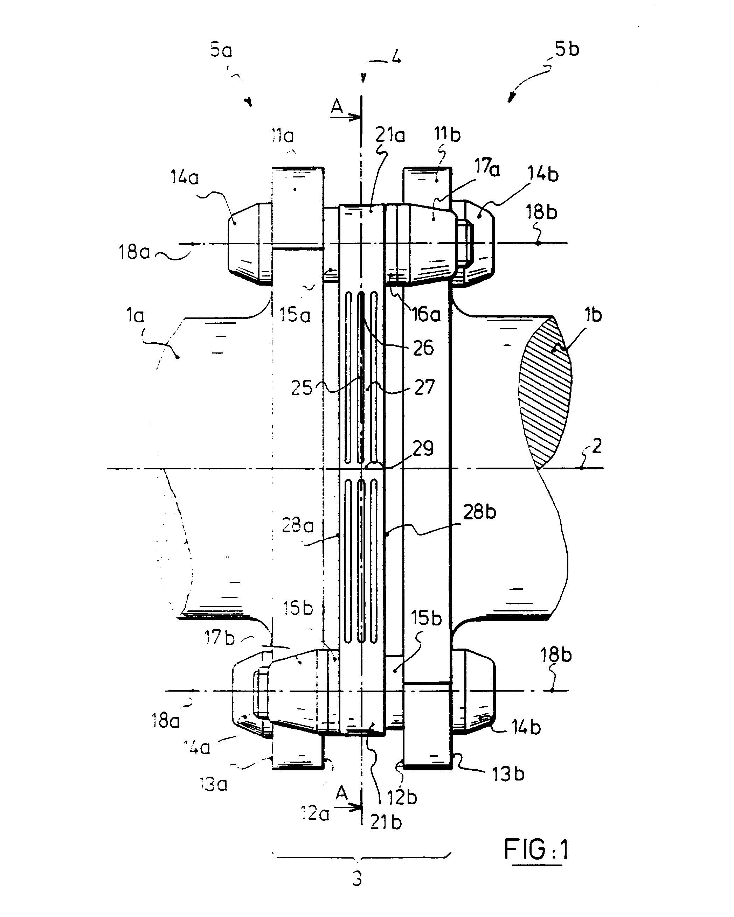

On remarquera que sur les figures 1 à 5, l'épaisseur des lames et des fentes a été augmentée pour améliorer la lisibilité des dessins.

On va maintenant décrire un premier exemple détaillé de réalisation de l'invention illustré par la figure 1. Les deux demi-arbres 1a et 1b pivotants autour de l'axe géométrique de rotation 2 sont reliés par un accouplement flexible 3 comportant un organe flexible 4 et des moyens de liaison 5a, 5b de l'organe flexible 4 respectivement aux arbres 1a et 1b.

Les moyens de liaison 5a, 5b comportant deux plateaux 11a et 11b en regard l'un de l'autre et solidaires respectivement des arbres 1a et 1b. Les plateaux 11a, 11b comportent chacun une face latérale 12a, 12b perpendiculaire à l'axe 2, lesdites faces 12a et 12b étant en regard l'une de l'autre. Les plateaux 11a, 11b comportent aussi une face 13a, 13b perpendiculaire à l'axe géométrique 2, ces faces 13a, 13b étant opposées aux faces 12a, 12b.

L'organe flexible 4 est boulonné contre les faces 12a et 12b. Les moyens de liaison 5a, 5b comportent à cet effet des vis 14a, 14b en appui sur les faces 13a, 13b et traversant les plateaux 11a, 11b par des perçages non référencés dans les plateaux et pour chaque vis successivement une rondelle d'épaisseur 15a, 15b en appui chacune sur une face en regard 12a, 12b, une rondelle de serrage 16a, 16b et un écrou 17a, 17b. Les zones de liaison 21a, 21b de l'organe flexible 4 sont serrées entre les rondelles d'épaisseur 15a, 15b et les rondelles de serrage 16a, 16b suivant des directions parallèles à l'axe 2. A cet effet, les axes géométriques 18a, 18b des vis 14a, 14b ainsi que les perçages non référencés des plateaux sont parallèles à l'axe géométrique 2.

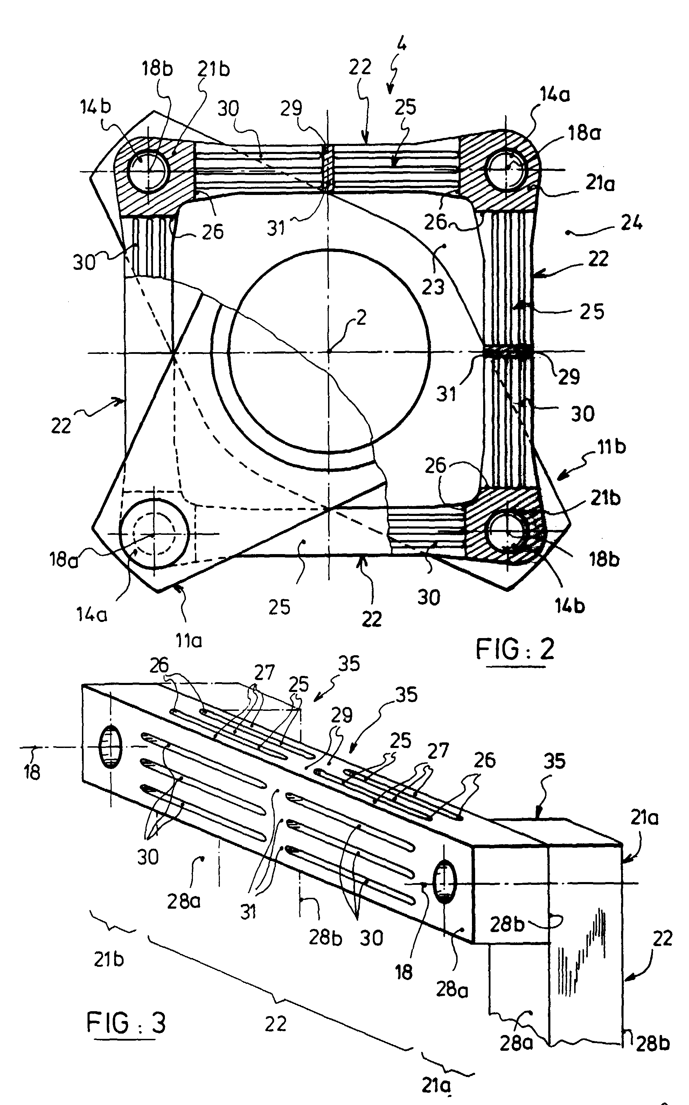

On se reportera maintenant à la figure 2. L'organe flexible 4 a la forme générale d'un carré comportant quatre zones de liaison 21a, 21b, disposées suivant les sommets d'un carré reliées deux à deux par quatre zones de déformation 22 disposées suivant les côtés de ce même carré. Les zones de liaison 21a, 21b comportent chacune un perçage non référencé d'axe géométrique 18a, 18b dans lequel passe une vis 14a, 14b reliant par serrage l'organe flexible 4 respectivement aux plateaux 11a, 11b. Les zones de liaison 21a et 21b sont disposées alternativement sur les sommets du carré, et chaque zone de déformation 22 relie par continuité de la matière une zone de liaison 21a à une zone de liaison 21b. L'organe flexible 4 définit, par la succession des zones de liaison 21a, 21b et des zones de déformation 22, une ligne fermée séparant un espace intérieur 23 comprenant l'axe 2 d'un espace extérieur 24 entourant l'organe flexible 4. Une pluralité de fentes 25 chacune dans un plan perpendiculaire à l'axe 2 traversant de part en part les zones de déformation 22 et mettant en communication l'espace intérieur 23 avec l'espace extérieur 24. Ces fentes 25 traversent les zones de déformation 22 sur une grande partie de leur longueur, afin de leur donner plus de souplesse, et les extrémités 26 desdites fentes arrivent dans le voisinage des zones de liaison 21a, 21b et à la limite contre ces zones de liaison 21a, 21b.

On se reportera de nouveau à la figure 1. Les fentes 25, allongées et chacune dans un plan perpendiculaire à l'axe 2, sont empilées suivant une direction parallèle à l'axe 2, l'espace de matière entre des fentes 25 ou entre ces fentes 25 et les faces latérales 28a et 28b de l'organe flexible 4, ces faces 28a et 28b étant elles-mêmes planes et perpendiculaires à l'axe 2, définissent un empilement de lames 27 séparées par les fentes 25, planes et perpendiculaires à l'axe 2 reliant les zones de liaison 21a, 21b entre elles par continuité de la matière, ces mêmes lames 27 se trouvant de ce fait reliées aussi entre elles par continuité de la matière.

Les zones de liaison 21a, 21b ne sont pas traversées par les fentes 25 ce qui permet de tenir l'organe flexible 4 boulonné et serré par ces zones de liaison 21a, 21b aux plateaux 11a, 11b.

Les extrémités 26 des fentes 25 sont arrondies afin de réduire la concentration des contraintes à cet endroit des lames 27.

Afin d'améliorer la résistance au flambage des lames 27, on maintiendra ces lames 27 par des renforts 29 reliant les parois latérales des fentes 25, de préférence par continuité de la matière. Dans un mode de réalisation préféré, les fentes 25 sont subdivisées en segments et les renforts 29 sont constitués par les espaces de matière laissés entre les extrémités contigües de ces segments. Les raccordements des renforts 29 avec les parois latérales des fentes 25 comportent aussi des arrondis pour réduire les concentrations de contrainte. Dans une première forme de réalisation illustrée par les figures 1 et 2 chaque fente 25 comporte un renfort unique 29 situé à mi-distance des extrémités 26. Dans une seconde forme de réalisation de l'invention, chaque fente 25 comporte deux renforts 29 situés à une distance des extrémités 26 environ égale à 33% de la longueur desdites fentes 25.

Les lames 27 situées vers l'extérieur, c'est à dire vers les faces latérales 28a, 28b de l'organe flexible 4 sont plus déformées que ces mêmes lames 27 situées au centre et doivent en conséquence supporter des contraintes de déformation plus importantes qui réduisent leur aptitude à transmettre le couple entre les arbres 1a, 1b. De ce fait, on donnera avantageusement aux lames 27 des épaisseurs différentes, plus minces vers les faces latérales 28a, 28b et plus épaisses au centre. Ceci sera obtenu simplement en rapprochant les fentes 25 les plus au bord des faces latérales 28a, 28b ou en les rapprochant entre elles, et en éloignant au contraire entre elles les fentes 25 les plus au centre.

On donnera aussi avantageusement aux fentes 25 une largeur plus faible au centre qu'à leurs extrémités 26, et un renflement équivalent aux faces latérales 28a, 28b au niveau de la zone centrale des lames 27. Ceci a pour effet d'augmenter la largeur des lames 27 dans leur partie centrale et de réduire cette largeur vers leurs extrémités, ce qui améliore leur résistance au flambage et par conséquent leur aptitude à transmettre le couple entre les arbres 1a, 1b. L'augmentation de la largeur des lames 27 dans leur partie centrale peut être obtenue aussi en donnant aux fentes 25 un profil courbe, et aux faces latérales 28a, 28b un renflement correspondant.

On se reportera de nouveau à la figure 2. Afin de réduire les contraintes résiduelles provenant de flexions parasites de l'organe flexible 4 selon un plan perpendiculaire à l'axe géométrique 2, l'invention propose aussi de disposer dans les zones de déformation 22 une pluralité de fentes parallèles 30 situées chacune dans un plan parallèle à l'axe 2 et parallèle au côté correspondant du carré formé par l'organe flexible 4. Ces fentes 30 traversent l'organe flexible 4 suivant une direction axiale et débouchent sur les faces latérales 28a, 28b dudit organe flexible 4. On disposera aussi avantageusement des renforts 31 entre les parois latérales des fentes 30. Ces renforts 31 seront de préférence semblables aux renforts 29 et disposés aux mêmes endroits.

On comprend que les séries de fentes 25 subdivisent les zones de déformation 22 en lames 27 plus flexibles et que les séries de fentes 30 subdivisent ces mêmes lames 27 en barreaux élémentaires apportant de la souplesse à l'organe flexible 4 dans le sens de la largeur desdites lames 27.

On se reportera maintenant à la figure 3 donnant un second exemple de réalisation de l'invention.

L'organe flexible, non représenté en entier sur la figure 3, se compose d'une pluralité de biellettes séparées 35 comportant chacune une zone de liaison 21a à l'arbre 1a, une zone de liaison 21b à l'arbre 1b ainsi qu'une zone de déformation 22 reliant par continuïté de la matière les zones de liaison 21a et 21b. Les zones de liaison 21a, 21b comportent chacune un perçage d'axe géométrique 18 permettant de faire passer les vis, non représentées sur la figure 3, assurant le maintien de la biellette par serrage sur les faces latérales 28a, 28b. Les axes géométriques 18 sont parallèles à l'axe de rotation 2 non représenté. Les biellettes 35 sont disposées suivant un polygone régulier dont les axes 18 constituant les sommets et les zones de déformation 22 les côtés. On comprend que la constitution d'une biellette 35 est en tous points semblable à un côté de l'organe flexible 4 monobloc défini par deux zones de liaison 21a,21b reliées entre elles par une zone de déformation 22.

Dans une forme de réalisation de l'invention, l'organe flexible 4 comporte des biellettes 35 disposées bout à bout suivant un polygone fermé à quatre cotés, chaque biellette 35 étant maintenue serrée par la zone de liaison 21a à la zone de liaison 21a d'une première biellette 35 adjacente sur leurs faces 28a, 28b, les axes 18 étant alignés, chaque biellette 35 étant aussi serrée de la même façon par l'autre zone de liaison 21b à la zone de liaison 21b de la seconde biellette 35 adjacente sur leurs faces 28a et 28b, les axes 18 étant alignés. Ainsi, dans chaque doublet de biellettes 35 adjacentes une biellette est sollicitée en traction et l'autre en compression.

Dans une autre forme de réalisation de l'invention plus particulièrement adaptée à l'entrainement d'un arbre 1a ou 1b par l'autre dans un seul sens de rotation, l'organe flexible 4 ne comporte plus que les biellettes 35 sollicitées en traction.

On va maintenant décrire un problème lié à ce type d'accouplement ainsi qu'un troisième exemple de réalisation de l'invention. On se reportera de nouveau à la figure 1. L'organe flexible 4 est monté sur deux plateaux 11a, 11b perpendiculaires à l'axe 2 et lié à ces plateaux par boulonnage suivant des axes géométriques 18a, 18b parallèles à l'axe 2. Ce montage souvent utilisé présente l'inconvénient de mettre l'organe flexible 4 en porte à faux par rapport aux plateaux 11a, 11b, ce qui produit pendant la transmission du couple entre les arbres 1a, 1b, des couples parasites sur les plateaux 11a, 11b et l'organe flexible 4 au niveau des points de boulonnage. Ces couples parasites provoquent le vrillage des plateaux 11a, 11b et de l'organe flexible 4. Le vrillage de l'organe flexible 4 génère des contraintes parasites qui réduisent sa capacité à transmettre le couple entre les arbres 1a, 1b.

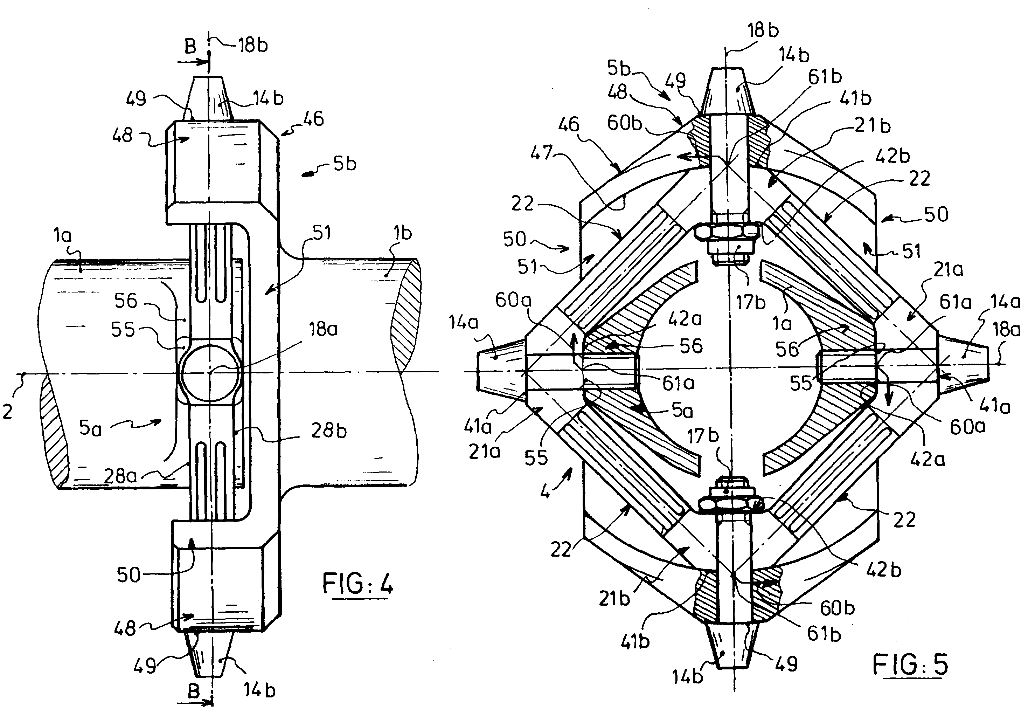

On se reportera maintenant à la figure 5. L'organe flexible 4 a la forme générale d'un carré. Les dispositions des zones de liaison 21a, 21b, des zones de déformation 22, des fentes 25 dont les extrémités 26 sont arrondies, des lames 27, des renforts 29 ainsi que des fentes parallèles 30 sont en tout point identiques à celles qui ont été décrites dans le premier exemple de réalisation de l'invention. Afin de ne pas alourdir ce document on se limitera à la description des éléments de l'organe flexible 4 qui en diffèrent.

Les moyens de liaison 5a, 5b maintiennent l'organe flexible 4 par un serrage suivant les axes géométriques 18a, 18b qui coïncident avec les diagonales du carré formé par le flector, qui sont dans un plan perpendiculaire à l'axe géométrique 2 et dont l'intersection est sur cet axe 2. Les zones de liaison 21a, 21b sont traversées respectivement par les axes géométriques 18a et 18b. Les zones de liaison 21a, 21b comportent aussi chacune une portée 41a, 41b tournée vers l'extérieur ainsi qu'une portée 42a, 42b tournée vers l'intérieur, les portées 41a, 41b et 42a, 42b d'une même zone de liaison 21a, 21b étant parallèles entre elles et perpendiculaires respectivement aux axes géométriques 18a, 18b. Les zones de liaison 21a, 21b sont chacune traversées par un perçage non référencé d'axe 18a, 18b.

Pour une meilleure compréhension de la description qui va suivre, on se reportera simultanément aux figures 4 et 5. Le moyen de liaison 5b comporte un tambour 46 solidaire de l'arbre 1b, délimité intérieurement par une paroi cylindrique 47 d'axe géométrique 2 et ouvert du côté de l'arbre 1a. Le tambour 46 comporte sur sa surface extérieure deux bossages 48 diamétralement opposés terminés par deux portées 49 tournées vers l'extérieur, perpendiculaires à l'axe géométrique 18b et traversées par cet axe. Les bossages 48 sont traversés de part en part chacun par un perçage non référencé d'axe géométrique 18b.

L'organe flexible 4 s'ajuste avec un jeu réduit sur les portées 41b à l'intérieur de la paroi 47 du tambour 46 et est boulonné à ce tambour 46 suivant l'axe géométrique 18b. A cette fin, le moyen de liaison 5b comporte aussi deux vis 14b qui traversent les bossages 48 et les zones de liaison 21b par les perçages suivant l'axe 18b, ainsi que deux écrous 17b vissés sur les vis 14b, les vis 14b et les écrous 17b maintenant ainsi l'organe flexible 4 au tambour 46 par un serrage radial centrifuge suivant l'axe 18b entre les portées 42b et 49.

Le tambour 46 comporte aussi deux ouvertures latérales 50 selon l'axe 18a, donc en regard des zones de liaison 21a, lesdites ouvertures 50 étant d'une taille suffisante et permettant l'accès depuis l'extérieur aux moyens de liaison 5a de l'organe flexible 4 avec l'arbre 1a. Le fond du tambour 46 comporte une paroi rigide 51 perpendiculaire à l'axe géométrique 2 et solidaire de l'arbre 1b.

La liaison 5a de l'organe flexible 4 avec l'arbre 1a comporte à l'extrémité de cet arbre 1a tourné vers l'arbre 1b et à la périphérie de cet arbre 1a deux portées 55, de préférence planes, formant les extrémités de deux bossages 56, ces portées 55 étant centrées sur l'axe géométrique 18a, perpendiculaires à lui et tournées vers l'extérieur. L'organe flexible 4 s'ajuste avec un jeu réduit ou un léger serrage par les portées intérieures 42a sur lesdites portées 55 et est tenu sur celles-ci par deux vis 14a selon l'axe 18a, ces vis 14a traversant les zones de liaison 21a et venant se visser dans les bossages 56. Ces vis 14a maintiennent donc l'organe flexible 4 contre les portées 55 par un serrage radial centripète selon l'axe 18a entre les portées 41a et 42a.

Avec une telle disposition et sous l'effet du couple transmis entre les arbres 1a, 1b, l'organe flexible 4 exerce sur les moyens de liaison 5a, 5b des forces tangentielles 60a, 60b s'appliquant au voisinage des points 61a, 61b d'intersection des axes géométriques 18a, 18b avec respectivement les portées 55 et la paroi 47. Les bossages 56 s'opposent aux forces 60a avec une flexion minimale car leur hauteur est limitée alors qu'ils s'étendent largement de part et d'autre de l'axe 18b à la périphérie de l'arbre 1a. De même, le tambour 46 s'oppose aux forces 60b avec une flexion minimale du fait de sa largeur de part et d'autre de l'axe 18b.

On remarquera que les ouvertures 50 du tambour 46 peuvent être juste suffisantes pour le montage des vis 14a, le tambour 46 constituant alors une enveloppe de protection de l'organe flexible 4.

Ces mêmes ouvertures 50 peuvent être au contraire très larges, débouchantes du côté de l'arbre 1a et limitant le tambour 40 à une fourche dont les branches seraient élargies.

L'invention n'est pas limitée aux réalisations représentées, mais en couvre au contraire toutes les variantes qui pourraient lui être apportées sans sortir de leur cadre tel que défini par les revendications.

Ainsi, l'organe flexible 4 peut être rectangulaire.

Les fentes 25 et 30 peuvent être garnies d'un matériau viscoélastique adhérant aux parois afin d'améliorer l'amortissement des résonnances. L'organe flexible 4 peut être lui-même enrobé dans un matériau amortissant et protecteur.

## Revendications

1. Dispositif d'accouplement flexible de deux arbres tournants, lesdits arbres (1a, 1b) d'axe géométrique (2) étant susceptibles de désalignement, ledit dispositif d'accouplement comportant lui-même un organe flexible (4) ainsi que des moyens de liaison (5a, 5b) de l'organe flexible (4) aux arbres tournants (1a, 1b), ledit organe flexible (4) comportant des zones de liaison (21a, 21b) respectivement aux arbres (1a, 1b), lesdites zones de liaison (21a, 21b) étant reliées entre elles par des zones de déformation (22), l'organe flexible (4) étant en alliage métallique à haute limite d'élasticité et comportant quatre zones de liaison (21a, 21b), les zones de déformation (22) comportant des lames (27) séparées par des fentes (25) comportant des extrémités (26), lesdites fentes (25) traversant de part en part les zones de déformation (22) suivant une direction perpendiculaire à l'axe (2), lesdites lames (27) étant perpendiculaires à l'axe (2) et reliant les zones de liaison (21a) et (21b) de chaque côté desdites zones de déformation (22), caractérisé en ce que: lesdites lames (27) sont solidaires entre elles et solidaires des zones de liaison (21a, 21b) par continuïté de la matière les constituant, et en ce que les extrémités (26) des fentes (25) sont arrondies.

2. Dispositif conforme à la revendication 1, caractérisé en ce que les parois latérales des fentes (25) sont reliées par au moins un renfort (29).

3. Dispositif conforme à la revendication 1 ou 2, caractérisé en ce que les renforts (29) relient les faces latérales des fentes (25) par continuité de la matière.

4. Dispositif conforme à l'une quelconque des revendications 1 à 3 caractérisé en ce que l'organe flexible (4) est en alliage de titane du groupe TA6V.

5. Dispositif conforme à l'une quelconque des revendications 1 à 4 caractérisé en ce que l'organe flexible (4) se compose de biellettes (35) comportant chacune successivement une zone de liaison (21a, 21b) à l'un des arbres (1a, 1b), une zone déformable (22) et une seconde zone de liaison (21b, 21a) à l'autre arbre (1b, 1a).

6. Dispositif conforme à l'une quelconque des revendications 1 à 5, caractérisé en ce que les moyens de liaison (5a,5b) de l'organe flexible (4) aux arbres (1a, 1b) maintiennent ledit organe flexible (4) par un serrage exercé suivant des directions radiales à l'axe géométrique (2) desdits arbres (1a, 1b).

7. Dispositif conforme à la revendication 6, caractérisé en ce que les moyens de liaison (5a, 5b) comportent un tambour (46) solidaire de l'arbre (1b) ainsi que des portées (55) disposées à la périphérie de l'arbre (1a), en ce que l'organe flexible (4) est maintenu contre la paroi intérieure (47) du tambour (46) par un serrage suivant une direction radiale centrifuge, et en ce que ledit organe flexible (4) est maintenu contre les portées (55) par un serrage radial centripète.

8. Dispositif conforme à la revendication 7, caractérisé en ce que le tambour (46) comporte des ouvertures latérales (50) en regard des zones de liaison (21a) de l'organe flexible (4).

9. Dispositif conforme à l'une quelconque des revendications 1 à 8, caractérisé en ce que les zones de déformation (22) comportent aussi chacune une pluralité de fentes (30) orientées suivant une direction parallèle à l'axe (2), lesdites fentes (30) soupant les fentes (25) et divisant ainsi les lames (27) en une pluralité de barreaux fins apportant de la souplesse dans le sens de la largeur des lames (27).

10. Dispositif conforme à l'une quelconque des revendications 1 à 9, caractérisé en ce que les lames (27) au centre de l'organe flexible (4) sont plus épaisses que les lames (27) au bord de l'organe flexible (4), afin de réduire les contraintes de déformation plus importantes sur ces lames (27).

11. Dispositif conforme à l'une quelconque des revendications 1 à 10, caractérisé en ce que l'épaisseur des lames (27) est plus importante dans la partie centrale desdits lamelles (27), pour améliorer leur résistance au flambage.

## Claims

1. Device for flexibly coupling two rotating shafts, the said shafts (1a, 1b) of geometric axis (2) being capable of misalignment, the said coupling device itself comprising a flexible member (4) and means (5a, 5b) of connecting the flexible member (4) to the rotating shafts (1a, 1b), the said flexible member (4) comprising zones (21a, 21b) for connecting respectively to the shafts (1a, 1b), the said connecting zones (21a, 21b) being joined together by zones of deformation (22), the flexible member (4) being made of metal alloy with high yield strength and comprising four connecting zones (21a, 21b), the deformation zones (22) comprising leaves (27) separated by slots (25) comprising ends (26), the said slots (25) passing right across the zones of deformation (22) in a direction perpendicular to the axis (2), the said leaves (27) being perpendicular to the axis (2) and connecting the connecting zones (21a) and (21b) on each side of the said deformation zones (22), characterized in that the said leaves (27) are secured together and are secured to the connecting zones (21a, 21b) by continuity of the material of which they are made, and in that the ends (26) of the slots (25) are rounded.

2. Device according to Claim 1, characterized in that the side walls of the slots (25) are connected by at least one strengthener (29).

3. Device according to Claim 1 or 2, characterized in that the strengtheners (29) connect the lateral faces of the slots (25) by continuity of the material.

4. Device according to any one of Claims 1 to 3, characterized in that the flexible member (4) is made of a titanium alloy from the TA6V group.

5. Device according to any one of Claims 1 to 4, characterized in that the flexible member (4) is made up of link rods (35) each comprising in succession a zone (21a, 21b) for connecting to one of the shafts (1a, 1b), a deformable zone (22) and a second zone (21b, 21a) for connecting to the other shaft (1b, 1a).

6. Device according to any one of Claims 1 to 5, characterized in that the means (5a, 5b) of connecting the flexible member (4) to the shafts (1a, 1b) hold the said flexible member (4) by clamping exerted in directions which are radial with respect to the geometric axis (2) of the said shafts (1a, 1b).

7. Device according to Claim 6, characterized in that the connecting means (5a, 5b) comprise a drum (46) secured to the shaft (1b) and bearing surfaces (55) arranged at the periphery of the shaft (1a), in that the flexible member (4) is held against the interior wall (47) of the drum (46) by clamping in a centrifugal radial direction, and in that the said flexible member (4) is held against the bearing surfaces (55) by centripetal radial clamping.

8. Device according to Claim 7, characterized in that the drum (46) has lateral openings (50) facing the connecting zones (21a) of the flexible member (4).

9. Device according to any one of Claims 1 to 8, characterized in that the deformation zones (22) also each include a number of slots (30) directed in a direction parallel to the axis (2), the said slots (30) intersecting the slots (25) and thus dividing the leaves (27) into a great many slender strips giving flexibility in the widthwise direction of the leaves (27).

10. Device according to any one of Claims 1 to 9, characterized in that the leaves (27) at the centre of the flexible member (4) are thicker than the leaves (27) at the edge of the flexible member (4), so as to reduce the higher deformation loading on these leaves (27).

11. Device according to any one of Claims 1 to 10, characterized in that the thickness of the leaves (27) is greater in the central part of the said leaflets (27), so as to improve their resistance to buckling.

## Patentansprüche

1. Bewegliche Kupplungsvorrichtung für zwei drehende Wellen, wobei diese Wellen (1a, 1b) mit der geometrischen Achse (2) sich zueinander verschieben können, diese Kupplungsvorrichtung ihrerseits ein bewegliches Organ (4) sowie Verbindungsmittel (5a, 5b) zur Verbindung des beweglichen Organs (4) mit den drehende Wellen (1a, 1b) aufweist, wobei dieses bewegliche Organ (4) Verbindungsbereiche (21a, 21b) zu den Wellen (1a bzw. 1b) aufweist, diese Verbindungsbereiche (21a, 21b) untereinander durch Verformungsbereiche (22) verbunden sind, das bewegliche Organ (4) aus einer Metallegierung mit hoher Elastizitätsgrenze besteht und vier Verbindungsbereiche (21a, 21b) aufweist, die Verformungsbereiche (22) Bänder (27) aufweisen, die durch Schlitze (25) mit Enden (26) voneinander getrennt sind, diese Schlitze (25) senkrecht zur Achse (2) durch die Verformungsbereiche (22) verlaufen, diese Bänder (27) senkrecht zur Achse (2) verlaufen und die Verbindungsbereiche (21a) und (21b) an jeder Seite dieser Verformungsbereiche (22) miteinander verbinden,
**dadurch gekennzeichnet, daß** die genannten Bänder (27) fest miteinander verbunden sind und fest mit den Verbindungsbereichen (21a, 21b) verbunden sind, indem das Material, aus dem sie bestehen, durchgehend ausgeführt ist, und daß die Enden (26) der Schlitze (25) abgerundet sind.

2. Vorrichtung nach Anspruch 1, **dadurch gekennzeichnet, daß** die Seitenwände der Schlitze (25) durch mindestens eine Verstärkung (29) miteinander verbunden sind.

3. Vorrichtung nach Anspruch 1 oder 2, **dadurch gekennzeichnet, daß** die Verstärkungen (29) die Seitenwände der Schlitze (25) miteinander verbinden, indem das Material durchgehend ausgeführt ist.

4. Vorrichtung nach einem der Ansprüche 1 bis 3, **dadurch gekennzeichnet, daß** das bewegliche Organ (4) aus einer Titanlegierung der Gruppe TA6V besteht.

5. Vorrichtung nach einem der Ansprüche 1 bis 4, **dadurch gekennzeichnet, daß** das bewegliche Organ (4) aus Barren (35) besteht, die jeweils einen Verbindungsbereich (21a, 21b) zu einer der Wellen (1a, 1b), einen Verformungsbereich (22) sowie einen zweiten Verbindungsbereich (21b, 21a) zu der anderen Welle (1b, 1a) aufweisen.

6. Vorrichtung nach einem der Ansprüche 1 bis 5, **dadurch gekennzeichnet, daß** die Verbindungsmittel (5a, 5b) des beweglichen Organs (4) zu den drehende Wellen (1a, 1b) dieses bewegliche Organ (4) durch Klemmen festhält, das in radialen Richtungen zur geometrischen Achse (2) dieser Wellen (1a, 1b) ausgeübt wird.

7. Vorrichtung nach Anspruch 6, **dadurch gekennzeichnet, daß** die Verbindungsmittel (5a, 5b) aus einer fest mit der Welle (1b) verbundenen Trommel (46) sowie aus am Umfang der Welle (1a) befindlichen Lagerflächen (55) besteht, daß das bewegliche Organ (4) an der Innenwand (47) der Trommel (46) durch Klemmen in radialer Zentrifugalrichtung festgehalten wird, und daß dieses bewegliche Organ (4) an den Lagerflächen (55) durch Klemmen in radialer Zentripetalrichtung gehalten wird.

8. Vorrichtung nach Anspruch 7, **dadurch gekennzeichnet, daß** die Trommel (46) seitliche Öffnungen (50) aufweist, die den Verbindungsbereichen (21a) des beweglichen Organs (4) gegenüberliegen.

9. Vorrichtung nach einem der Ansprüche 1 bis 8, **dadurch gekennzeichnet, daß** die Verformungsbereiche (22) ferner jeweils mehrere Schlitze (30) aufweisen, die parallel zur Achse (2) ausgerichtet sind, wobei diese Schlitze (30) die Schlitze (25) schneiden und so die Bänder (27) in eine Vielzahl von dünnen Stäben teilen, die in der Richtung der Breite der Bänder (27) die Beweglichkeit erhöhen.

10. Vorrichtung nach einem der Ansprüche 1 bis 9, **dadurch gekennzeichnet, daß** die Bänder (27) in der Mitte des beweglichen Organs (4) dicker sind als die Bänder (27) an der Kante des beweglichen Organs (4), um die Verformungsbelastungen, die an diesen Bändern (27) höher ist, zu verringern.

11. Vorrichtung nach einem der Ansprüche 1 bis 10, **dadurch gekennzeichnet, daß** die Bänder (27) in ihrem mittleren Teil dicker sind, um ihre Knickfestigkeit zu erhöhen.
